# EUROPEAN PATENT APPLICATION

(11) **EP 4 844 894 A1**
(43) Date of publication of application: **25.11.2026**
(21) Application number: 25741380.7
(22) Date of filing: 07.01.2025
(51) Int. Cl.: H01M 10/658, H01M 10/654, H01M 50/209, H01M 50/249, H01M 10/625

(54) **BATTERY PACK AND ELECTRIC SYSTEM**

(30) Priority: 19.01.2024 CN 202410084618
(71) Applicant: BYD Company Limited, Shenzhen, Guangdong 518118 (CN)
(72) Inventor: XU, Yingying, Shenzhen, Guangdong 518118 (CN); LI, Zhenzhen, Shenzhen, Guangdong 518118 (CN); LIU, Guoxiong, Shenzhen, Guangdong 518118 (CN); LIN, Wensheng, Shenzhen, Guangdong 518118 (CN); WANG, Gaowu, Shenzhen, Guangdong 518118 (CN)
(74) Representative: Mathys & Squire
(86) International application number: PCT/CN2025/071065
(87) International publication number: WO 2025/152817

(57) **Abstract**

An electric system, comprising a battery pack, wherein the battery pack comprises battery cells, and each battery cell comprises an electrode core and a casing; the electrode core is arranged in the casing, the electrode core and a first surface of the casing are spaced apart from each other, and the first surface of the casing is a first surface of the battery cell; and the thermal resistance of the spacing area between the electrode core and the first surface of the casing is A, the thermal resistance of the electrode core in a direction perpendicular to the first surface is B, and A and B satisfy the relational expression: 1/48<A/B.

## Description

### CROSS-REFERENCE TO RELATED APPLICATIONS

The present disclosure claims priority to Chinese Patent Application No. 202410084618.4, filed with the China National Intellectual Property Administration on January 19, 2024 and entitled "BATTERY PACK AND ELECTRICAL SYSTEM", which is incorporated herein by reference in its entirety.

### TECHNICAL FIELD

The present disclosure relates to the field of battery technologies, and in particular, to a battery pack and an electrical system.

### BACKGROUND

With the rapid development of new energy vehicles, battery safety issues have attracted considerable attention from the market. Batteries are highly prone to thermal runaway when being heated or punctured during production or operation. If heat generated by a cell undergoing thermal runaway is not suppressed from diffusing, the heat will quickly affect the safety of cells in other groups. Therefore, achieving prevention or suppression of heat diffusion in batteries has become a common industry challenge.

In related technologies, heat diffusion control for battery packs mainly involves adding thermal insulation materials in gaps between batteries to achieve thermal insulation and suppress heat transfer, thereby suppressing heat diffusion within the battery. However, battery pack space is limited, and the thermal insulation material takes up a specific amount of space. Too much thermal insulation material reduces volumetric energy of the battery, while too little thermal insulation material fails to effectively suppress heat diffusion.

### SUMMARY

The present disclosure is intended to resolve at least one of the technical problems in conventional technologies. Therefore, an objective of the present disclosure is to provide a battery pack that is capable of suppressing heat diffusion and ensuring volumetric energy.

Another objective of the present disclosure is to provide an electrical system.

A battery pack according to an embodiment of the present disclosure includes: a cell, wherein the cell includes an electrode assembly and a casing, the electrode assembly is disposed in the casing, and the electrode assembly and a first surface of the casing are spaced apart from each other; and a heat resistance of a spacing region between the electrode assembly and the first surface of the casing is denoted as A, and a heat resistance of the electrode assembly along a direction perpendicular to the first surface is denoted as B, wherein A and B satisfying the relationship: 1/48 < A/B.

Therefore, by defining a range for a ratio of the heat resistance of the spacing region between the electrode assembly and the first surface of the casing to the heat resistance of the electrode assembly in the direction perpendicular to the first surface, the effect of suppressing outward diffusion of heat in the battery pack can be improved, thereby improving operational safety of the battery pack.

In some examples of the present disclosure, A and B satisfy the relationship: A/B < 10.

In some examples of the present disclosure, an area of the second surface is larger than that of the first surface.

In some examples of the present disclosure, a plurality of cells are provided, the plurality of cells constituting a plurality of cell groups, each cell group including at least two cells with the second surfaces opposite to each other, the first surfaces of the cells in two adjacent cell groups opposite to each other, and the second surface of the cell and the first surface of the cell being perpendicular to each other.

In some examples of the present disclosure, a distance between the electrode assembly and the first surface of the casing is d, a wall thickness of the casing is a, a heat conductivity of the casing is denoted as λ1, and a length of the cell is denoted as L, wherein d, a, L, λ1 and A satisfy the relationship: A = d/[(2*a*L)*λ1], and d, a and L are in the same unit.

In some examples of the present disclosure, a thermal and electrical insulating component or an insulating and heat dissipating component is disposed in a spacing region between the electrode assembly and the first surface of the casing.

In some examples of the present disclosure, d satisfies the relationship: 2 mm < d < 12 mm.

In some examples of the present disclosure, L satisfies the relationship: 400 mm < L < 2500 mm.

In some examples of the present disclosure, two sides of the cell along a width direction are respectively the first surfaces of the cell, a length of the cell is denoted as L, a width of the cell is denoted as H, a thickness of the cell is denoted as D, and a heat conductivity of the electrode assembly (11) along a direction perpendicular to the first surface is denoted as λ2, wherein H, D, λ and B satisfy the relationship: B = H/[(D*L)*λ2], and H, D and L are in the same unit.

In some examples of the present disclosure, H satisfies the relationship: 80 mm < H < 200 mm.

In some examples of the present disclosure, D satisfies the relationship: 10 mm < D < 1000 mm.

In some examples of the present disclosure, λ2 satisfies the relationship: 10 W/(m*K) < λ2 < 30 W/(m*K).

In some examples of the present disclosure, a thermal and electrical insulating component or an insulating and heat dissipating component is disposed between the second surfaces of two adjacent cells in each cell group; and/or the second surfaces of two adjacent cells in each cell group are in contact with each other; and/or the second surfaces of two adjacent cells in each cell group are spaced apart from each other with an air gap therebetween.

In some examples of the present disclosure, a thermal and electrical insulating component or an insulating and heat dissipating component is disposed between the first surfaces of the cells in two adjacent cell groups; and/or the first surfaces of the cells in two adjacent cell groups are in contact with each other; and/or the first surfaces of the cells in two adjacent cell groups are spaced apart from each other with an air gap therebetween.

In some examples of the present disclosure, a tray and a cold plate are further included, wherein one side of the tray is open, the cold plate is disposed on the open side of the tray, and a plurality of the cells are disposed in the tray.

In some examples of the present disclosure, the electrode assembly includes a plurality of layers of electrode sheets, wherein an extension direction of a single layer of the electrode sheet is a direction perpendicular to the first surface along which the electrode assembly extends, and an arrangement direction of the plurality of layers of the electrode sheets is a direction perpendicular to the second surface along which the electrode assembly extends.

In some examples of the present disclosure, an area of the first surface is less than that of the second surface.

An electrical system according to the present disclosure includes the foregoing battery pack.

Additional aspects and advantages of the present disclosure will be set forth in part in the following description, and in part will be apparent from the following description, or may be learned through practice of the present disclosure.

### BRIEF DESCRIPTION OF DRAWINGS

The foregoing and/or additional aspects and advantages of the present disclosure become apparent and readily understandable from the description of embodiments in conjunction with the following drawings, in which:
FIG. 1 is a diagram of a cell according to an embodiment of the present disclosure;
FIG. 2 is a three-dimensional diagram of a cell according to an embodiment of the present disclosure;
FIG. 3 is a diagram of a cell group according to an embodiment of the present disclosure;
FIG. 4 is a diagram of a battery pack according to an embodiment of the present disclosure;
FIG. 5 is a diagram of a battery pack according to an embodiment of the present disclosure from another perspective;
FIG. 6 is a diagram of a battery pack according to an embodiment of the present disclosure from another perspective;
FIG. 7 is a diagram of a battery pack according to an embodiment of the present disclosure from yet another perspective; and
FIG. 8 is a block diagram of an electrical system according to an embodiment of the present disclosure.

Reference numerals:
100: battery pack; 110: cell group;
10: cell; 11: electrode assembly; 12: casing; 121: first surface of the casing; 122: second surface; 123: third surface; 13: first surface of the cell;
20: thermal insulation material;
200: electrical system;
30: tray; 31: cold plate.

### DESCRIPTION OF EMBODIMENTS

The following describes in detail embodiments of the present disclosure, and embodiments described with reference to the accompanying drawings are examples.

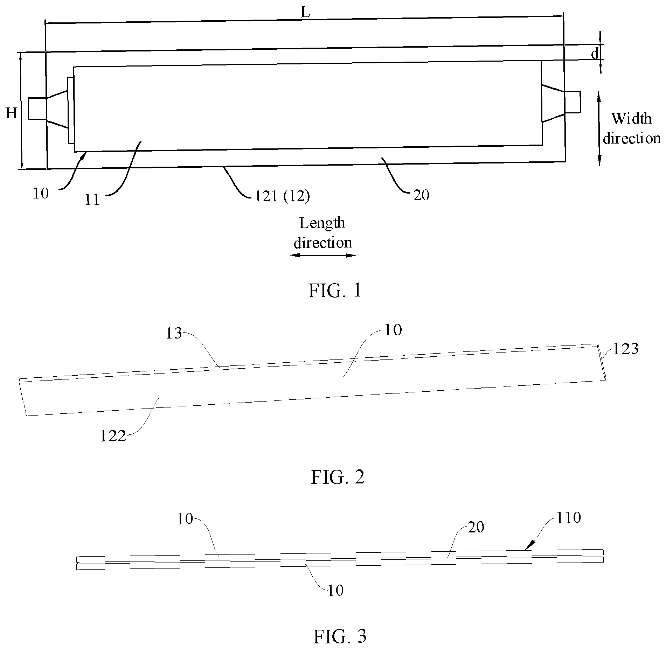

A battery pack 100 according to embodiments of the present disclosure is described below with reference to FIG. 1 to FIG. 7. The battery pack 100 according to the embodiments of the present disclosure can be used in an electrical system.

As shown in FIG. 1 to FIG. 7, the battery pack 100 according to the present disclosure may mainly include a cell 10, wherein the cell 10 includes an electrode assembly 11 and a casing 12, the electrode assembly 11 is disposed in the casing 12, and the electrode assembly 11 and a first surface 121 of the casing 12 are spaced apart from each other.

Specifically, heating and puncture may cause thermal runaway in the cell 10 in the battery pack 100. Thermal runaway in the cell 10 may occur either at a middle position of the cell 10 or at an edge position of the cell 10. The cell 10 includes an electrode assembly 11 and a casing 12, and the electrode assembly 11 is disposed in the casing 12, so that the casing 12 can protect the electrode assembly 11, and prevent heat from diffusing to the outside of the cell 10 when thermal runaway occurs in the electrode assembly 11.

Further, the casing 12 includes a first surface 121 and a second surface 122. The electrode assembly 11 and the first surface 121 of the casing 12 are spaced apart from each other, so that when thermal runaway occurs in the electrode assembly 11, the electrode assembly 11 is prevented from being in direct contact with the first surface 121 of the casing 12. This prevents a large amount of heat from being rapidly transferred to the outside of the cell 10 through the first surface 121 of the casing 12, thereby preventing the cell 10 undergoing thermal runaway from causing the occurrence of thermal runaway in the adjacent cell 10, and then reducing the occurrence of safety issues in the battery pack 100. The electrode assembly 11 and the first surface 121 of the casing 12 are spaced apart from each other, so that heat generated by thermal runaway in the electrode assembly 11 can be preferentially transferred from a position of thermal runaway along a direction of the first surface 13 of the cell 10, and can be quickly dissipated through a heat dissipation apparatus. The first surface 121 of the casing 12 is a first surface 13 of the cell 10. The second surface 122 of the casing 12 is a second surface of the cell 10. The third surface 123 of the casing 12 is a third surface of the cell 10.

Further, when thermal runaway occurs in the electrode assembly 11, heat may be diffused along two directions in the battery pack 100. One diffusion direction passes through a spacing region between the electrode assembly 11 undergoing thermal runaway and the corresponding first surface 121 of the casing 12. A heat resistance of the spacing region between the electrode assembly 11 and the first surface 121 is denoted as A, and a heat resistance of the electrode assembly 11 along a direction perpendicular to the first surface 13 is denoted as B, with A and B satisfying the relationship: 1/48 < A/B.

Further, a ratio of the heat resistance of the spacing region between the electrode assembly 11 and the first surface 121 of the casing 12 to the heat resistance of the electrode assembly 11 along the direction perpendicular to the first surface 13 is used to represent a matching relationship between a heat transfer capacity of the spacing region between the electrode assembly 11 and the first surface 121 of the casing 12 and a heat transfer capacity of the electrode assembly 11 along the direction perpendicular to the first surface 13. During heat transfer, by ensuring that A/B > 1/48, it is ensured that after thermal runaway occurs in the cell, the electrode assembly 11 dissipates heat along the direction perpendicular to the first surface 13. After enhancing a thermal insulation capacity of the spacing region between the electrode assembly 11 and the first surface 121 of the casing 12, it is further ensured that heat transfer only occurs in the cell undergoing thermal runaway, reducing impact on other cells along the direction perpendicular to the first surface 13, avoiding heat diffusion between two adjacent cells along the direction perpendicular to the first surface 13, and thereby ensuring safety of the battery pack.

Further, according to an embodiment of the present disclosure, A and B satisfy the relationship: A/B < 10. Specifically, if the ratio of the heat resistance of the spacing region between the electrode assembly 11 and the first surface 121 to the heat resistance of the electrode assembly 11 along the direction perpendicular to the first surface 13 is greater than 10, the spacing region between the electrode assembly 11 and the first surface 121 occupies too much space in the cell 10. Although the cell 10 has a low heat diffusion risk, a volume density and an energy density of the cell 10 are too low, which may increase volume of the battery pack 100 and increase costs of the battery pack 100.

In the embodiment of the present disclosure, the ratio of the heat resistance of the spacing region between the electrode assembly 11 and the first surface 121 to the heat resistance of the electrode assembly 11 along the direction perpendicular to the first surface 13 is set to between 1/48 and 10. This not only effectively prevents heat generated by the cell 10 undergoing thermal runaway from diffusing along the direction perpendicular to the first surface 13 and improves operational safety of the battery pack 100, but also ensures the volume density and energy density of the cell 10, thereby ensuring that the energy density of the battery pack 100 meets use requirements.

As shown in FIG. 3, FIG. 5 and FIG. 6, a plurality of cells 10 are provided. The plurality of cells 10 constitute a plurality of cell groups 110. Each cell group 110 includes at least two cells 10 with second surfaces 122 disposed opposite to each other. First surfaces 13 of the cells 10 in two adjacent cell groups 110 are disposed opposite to each other. Specifically, the battery pack 100 includes the plurality of cell groups 110 including the plurality of cells 10, which can increase a battery capacity of the battery pack 100 and improve a range of the battery pack 100. The first surfaces 13 of the cells 10 in two adjacent cell groups 110 are disposed opposite to each other, and within a ratio range specified in this application, heat generated after thermal runaway of the cell is less likely to transfer between the two adjacent cell groups 110 through the first surfaces 13 of the cells 10, or heat dissipation after heat transfer is increased.

Further, each cell group 110 includes at least two cells 10 with the second surfaces 122 disposed opposite to each other, that is, in two cells 10 that in contact with each other, the second surfaces 122 of the two are in contact with each other. Due to limiting a heat transfer capacity of one cell 10 in one cell group 110 along the direction perpendicular to the first surface 13, when one cell 10 in each cell group 110 generates heat, the heat can be preferentially transferred through the second surface 122 of the cell 10 to other cells 10 in the same cell group 110, thereby slowing down heat diffusion to other cell groups 110 in the battery pack 100. In an embodiment of the present disclosure, the second surface 122 and the first surface 121 are perpendicular to each other. The second surface 122 of the cell 10 is parallel to the electrode assembly 11. The first surface 121 and the electrode assembly 11 are perpendicular to each other. The second surface 122 of the cell 10 is disposed on at least one side of the electrode assembly 11 along a thickness direction. The first surface 121 of the cell 10 is disposed on at least one side of the electrode assembly 11 along a width direction.

Further, as shown in FIG. 2, an area of the second surface 122 is larger than that of the first surface 13 of the cell 10, that is, heat transfer efficiency of the first surface 13 of the cell 10 is less than heat transfer efficiency of the second surface 122. When thermal runaway occurs in the electrode assembly 11, heat transferred through the first surface 121 is less than heat transferred through the second surface 122. This can further reduce heat transferred through the first surface 121 of the cell 10 to other cells 10, thereby reducing thermal insulation requirements between adjacent cell groups 110 in the battery pack 100, reducing thermal insulation space, and improving space utilization of the battery pack 100. When the first surfaces 13 of the cells 10 in two adjacent cell groups 110 are disposed opposite to each other, heat transferred from the cell group 110 undergoing thermal runaway to the cell group 110 not undergoing thermal runaway can be reduced, thereby suppressing heat diffusion between the adjacent cell groups 110 and further suppressing heat diffusion in the battery pack 100.

In an embodiment of the present disclosure, the electrode assembly 11 includes a plurality of layers of electrode sheets. Specifically, the plurality of layers of electrode sheets may be formed by stacking a plurality of independent components, or may be of a multi-layer electrode structure formed by winding an independent electrode sheet. Structures of the electrode assembly 11 include a stacked structure and a wound structure. When the electrode assembly 11 is a stacked structure, in the electrode assembly 11, a direction perpendicular to the first surface 13 is an extension direction of a single layer of the electrode sheet, and a direction perpendicular to the second surface 122 is a stacking direction of the plurality of layers of the electrode sheets. When the electrode assembly 11 is of the wound structure, in the electrode assembly 11, a direction perpendicular to the first surface 13 corresponds to two ends along an axial direction of the cell 10, and a direction perpendicular to the second surface 122 is a winding direction of the plurality of layers of the electrode sheets.

In an embodiment of the present disclosure, the casing 12 further includes a third surface 123, wherein the first surface 121, the second surface 122, and the third surface 123 are perpendicular to each other. According to some embodiments of the present disclosure, at least one of the first surface 121, the second surface 122, and the third surface 123 is provided with a terminal pole and an explosion-proof valve. According to some other embodiments of the present disclosure, at least two of the first surface 121, the second surface 122, and the third surface 123 are each provided with a terminal pole and an explosion-proof valve.

As shown in FIG. 1, a distance between the electrode assembly 11 and the first surface 121 of the casing 12 is denoted as d, a wall thickness of the casing 12 is denoted as a, a heat conductivity of the casing 12 is denoted as λ1, and a length of the cell 10 is denoted as L, with d, a, L, λ1 and A satisfying the relationship: A = d/[(2*a*L)*λ1]. Specifically, after thermal runaway occurs in the cell 10, heat may be transferred to the outside of the electrode assembly 11 along the spacing region between the electrode assembly 11 and the corresponding first surface 121 of the casing 12. A heat resistance of the spacing region between the electrode assembly 11 and the first surface 121 of the corresponding casing 12 is d/[(2*a*L)*λ1]. In the embodiment of the present disclosure, d, a, and L are in the same unit.

As shown in FIG. 1, a thermal and electrical insulating component, an insulating and heat dissipating component, or an air gap is disposed in the spacing region between the electrode assembly 11 and the first surface 121 of the casing 12. Specifically, the thermal and electrical insulating component may suppress heat transfer from the electrode assembly 11 to the first surface 13 of the cell 10, and may suppress heat transfer to the first surface 121 of the cell 10 in the adjacent cell group 110. This can prevent heat of the cell 10 undergoing thermal runaway from being transferred to the normal cell 10 not undergoing thermal runaway, and can prevent the normal cell 10 not undergoing thermal runaway from initiating thermal runaway, thereby improving operational safety of the battery pack 100. The electrical insulation and heat dissipation component can accelerate heat dissipation between the electrode assembly 11 and the first surface 13 of the cell 10, and reduce heat transferred to the first surface 13 of the cell 10, thereby effectively suppressing heat diffusion. It will be further noted that the thermal and electrical insulating component or the electrical insulation and heat dissipation component is a thermal insulation material 20.

As shown in FIG. 1, d satisfies the relationship: 2 mm < d < 12 mm. Specifically, if the distance between the electrode assembly 11 and the first surface 121 of the casing 12 is not more than 2 mm, the distance between the electrode assembly 11 and the casing 12 is too close, so that it is inconvenient to assemble the thermal and electrical insulating component or the electrical insulation and heat dissipation component between the electrode assembly 11 and the first surface 121 of the casing 12. If the distance between the electrode assembly 11 and the first surface 121 of the casing 12 is more than 12 mm, a capacity density of the cell 10 may be affected. Selecting the distance between the electrode assembly 11 and the first surface 121 of the casing 12 to be between 2 mm and 12 mm not only facilitates assembly of the thermal and electrical insulating component and the electrical insulation and heat dissipation component, but also ensures an energy density of the cell 10.

In an embodiment of the present disclosure, the distance between the electrode assembly 11 and the first surface 121 of the casing 12 is preferably set to between 2 mm and 8 mm, and an insulating component, including but not limited to a polypropylene spacer, may be filled between the electrode assembly 11 and the first surface 121 of the casing 12. A thermal insulation component, including but not limited to polyurethane foam, may be further filled between the electrode assembly 11 and the first surface 121 of the casing 12. Alternatively, a space between the electrode assembly 11 and the first surface 121 of the casing 12 may not be filled.

As shown in FIG. 1, L satisfies the relationship: 400 mm < L < 2500 mm. In the embodiment of the present disclosure, selecting the length of the cell 10 to be between 400 mm and 2500 mm allows heat to be rapidly diffused through the second surface 122 to the adjacent cell 10 in the same cell group 110 when thermal runaway occurs in the cell 10, thereby cooling the cell 10. In this case, this reduces heat transferred through the first surface 121 of the casing 12 to the cell 10 in the adjacent cell group 110, thereby reducing the risk of thermal runaway of the cell 10 in the adjacent cell group 110 and ensuring the effect of suppressing heat diffusion of the battery pack 100.

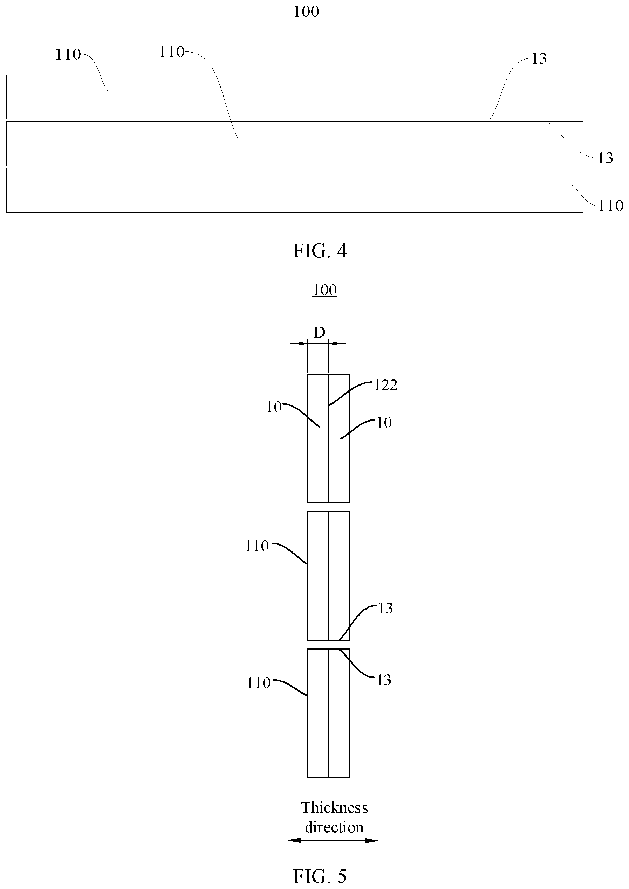

Referring to FIG. 1 and FIG. 5, a width of the cell 10 is denoted as H. Two sides of the cell 10 along the width direction are respectively the first surfaces 13 of the cell 10. A length of the cell 10 is denoted as L. A width of the cell is denoted as H. A thickness of the cell 10 is denoted as D. A heat conductivity of the electrode assembly 11 along a direction perpendicular to the first surface 13 is denoted as λ2. H, D, λ2 and B satisfy the relationship: B = H/[(D*L)*λ2], and H, D and L are in the same unit. Specifically, selecting the two sides along the width direction of the cell 10 to be the first surfaces 13 of the cell 10. After thermal runaway occurs in the cell 10, a heat resistance when heat is transferred along the direction perpendicular to the first surface 13 of the cell 10 (namely an arrangement direction of the cell groups) is H/[(D*L)*λ2]. In the embodiment of the present disclosure, H, D, and L are in the same unit.

Further, by taking a ratio of the heat resistance of the spacing region between the electrode assembly 11 and the first surface 121 of the corresponding casing 12 to the heat resistance of the electrode assembly 11 along the direction perpendicular to the first surface 13, and simplifying, a ratio of the heat resistance of the spacing region between the electrode assembly 11 and the first surface 121 to the heat resistance of the electrode assembly 11 along the direction perpendicular to the first surface 13 can be obtained as {d/[(2*a)*λ1]}/{H/[(D)*λ2]}. According to the embodiments of the present disclosure, 1/48 < {d/[(2*a)*λ1]}/{H/[(D)*λ2]} < 10.

As shown in FIG. 1, H satisfies the relationship: 80mm < H < 200mm. Specifically, if the width of the cell 10 is less than 80 mm, an area of the second surface 122 of the cell 10 may be too small. When thermal runaway occurs in the cell 10, too little heat is transferred through the second surface 122 to the adjacent cell 10 in the same cell group 110, so that the cell 10 cannot rapidly dissipate heat and cool down, and heat diffusion easily occurs in the battery pack 100. If the width of the cell 10 exceeds 200 mm, a size of the cell 10 may be too large, which may cause uneven temperature or exhaust problems. Therefore, selecting the width of the cell 10 to be between 80 mm and 200 mm not only allows the cell 10 undergoing thermal runaway to rapidly dissipate heat and cool down, but also maintains normal operation of the cell 10 undergoing thermal runaway.

As shown in FIG. 1, D satisfies the relationship: 10 mm < D < 1000 mm. Specifically, if the thickness of the cell 10 is less than 10 mm, a size of the casing 12 of the cell 10 may be 12 too narrow, resulting in a decrease in energy density of the cell. If the thickness of the cell 10 exceeds 1000 mm, the casing of the cell 10 may be 12 too thick. If thermal runaway occurs at a specific position in the cell 10, heat cannot be transferred outward rapidly, which is not beneficial to heat dissipation of the cell 10 undergoing thermal runaway. Therefore, selecting the thickness of the cell 10 to be between 10 mm and 1000 mm not only facilitates the placement of the electrode assembly 11 and the thermal insulation material 20 in the casing 12, but also ensures heat dissipation efficiency of the cell 10.

According to an embodiment of the present disclosure, λ2 satisfies the relationship: 10 W/(m*K) < λ2 < 30 W/(m*K). Specifically, according to an embodiment of the present disclosure, the heat conductivity of the electrode assembly 11 along the direction perpendicular to the first surface 13 ranges from 10 W/(m*K) to 30 W/(m*K), and the heat conductivity of the electrode assembly 11 along the direction perpendicular to the second surface 122 ranges from 0.1 W/(m*K) to 5 W/(m*K).

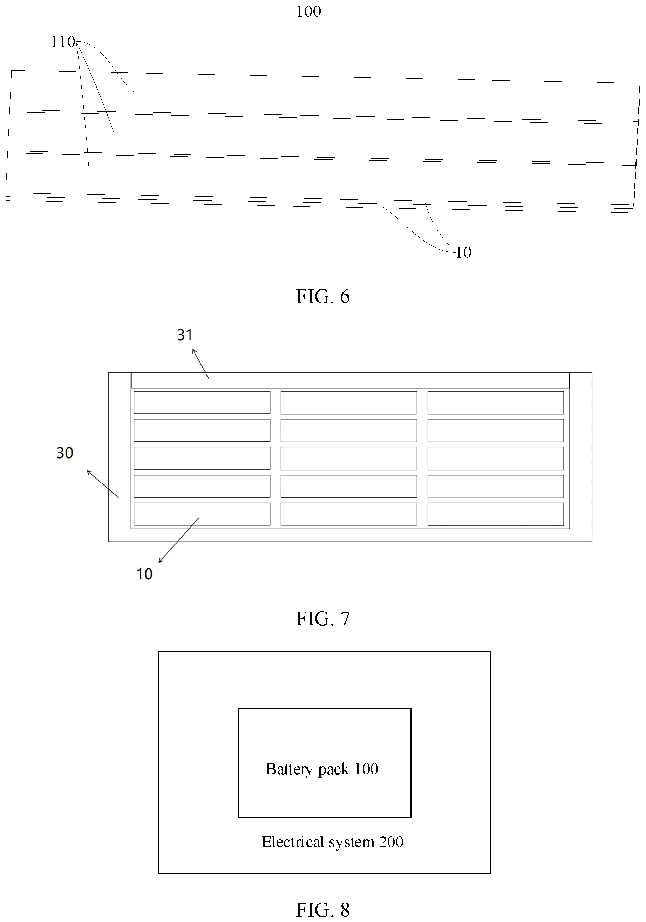

According to an embodiment of the present disclosure, as shown in FIG. 6, three cells 10 are stacked along the second surface 122 to form a cell group 110, and the three cell groups 110 are arranged along the direction perpendicular to the first surface 13 of the cells 10. The middle cell group is punctured to trigger heat diffusion in the topmost cell of the cell group, and after thermal runaway ends, whether thermal runaway occurs in the adjacent cell is observed (that is, whether heat diffusion occurs is determined). For each individual cell, the values of d, a, λ1, H, D and λ2 are individually selected, where each cell uses a lithium iron phosphate system. The table below shows the values of d, a, λ1, H, D, and λ2 for each group and corresponding experimental results:

| Serial number | d( mm) | a( mm) | λ1( W/(m*K)) | H( mm) | D( mm) | λ2( W/(m*K)) | d/[(2*a*L)*λ1] | H/[(D*L)*λ2] | A/B | Whether heat diffusion occurs? | Volumetric energy density |
|---|---|---|---|---|---|---|---|---|---|---|---|
| Example 1 | 2.000 | 0.300 | 160.000 | 90.000 | 13.500 | 20.000 | 0.021 | 0.333 | 0.063 | No | 420 WH/L |
| Example 2 | 4.000 | 0.300 | 160.000 | 90.000 | 13.500 | 20.000 | 0.042 | 0.333 | 0.125 | No | 408 WH/L |
| Example 3 | 6.000 | 0.300 | 160.000 | 90.000 | 13.500 | 20.000 | 0.063 | 0.333 | 0.188 | No | 397 WH/L |
| Example 4 | 2.000 | 0.300 | 160.000 | 180.000 | 13.500 | 20.000 | 0.021 | 0.667 | 0.031 | No | 439 WH/L |
| Example 5 | 1.000 | 0.300 | 160.000 | 90.000 | 13.500 | 20.000 | 0.010 | 0.333 | 0.031 | No | 425 WH/L |
| Example 6 | 12.000 | 0.100 | 16.000 | 120.000 | 13.500 | 22.000 | 3.750 | 0.404 | 9.281 | No | 392 WH/L |
| Comparative example 1 | 1.000 | 0.300 | 160.000 | 180.000 | 13.500 | 20.000 | 0.010 | 0.667 | 0.016 | Yes | 442 WH/L |
| Comparative example 2 | 2.000 | 0.300 | 160.000 | 180.000 | 13.500 | 10.000 | 0.021 | 1.333 | 0.016 | Yes | 486 WH/L |
| Comparative example 3 | 12.000 | 0.100 | 16.000 | 90.000 | 13.500 | 30.000 | 3.750 | 0.222 | 16.875 | No | 330 WH/L |
| Comparative example 4 | 12.000 | 0.100 | 16.000 | 120.000 | 13.500 | 25.000 | 3.750 | 0.356 | 10.547 | No | 372 WH/L |

By comparing Examples 1 to 6 with Comparative Examples 1 and 2 in the table, it can be seen that when the value of A/B is greater than 1/48, no heat diffusion occurs in the entire battery pack, that is, no thermal runaway occurs in the adjacent cell group of the cell group undergoing thermal runaway. However, when the value of A/B is less than 1/48, heat diffusion occurs in the battery pack. Therefore, when the value of A/B is greater than 1/48, the thermal insulation effect between two adjacent cell groups is ensured, safety risks in the battery pack are prevented from spreading, the safety of the adjacent cell group is ensured, and the safety of the entire battery pack is improved.

By comparing Examples 1 to 6 with Comparative Examples 3 and 4 in the table, it can be seen that when the value of A/B is greater than 10, the volumetric energy density of the entire cell is less than 375 WH/L, which cannot meet design requirements of the cell. Specifically, when the distance between the electrode assembly 11 and the first surface 121 of the casing 12 is too large, heat is difficult to transfer through the first surface 121 of the casing 12 to the adjacent cell group 110. Although the battery pack 100 has a low heat diffusion risk, a volume occupied by the electrode assembly 11 in the cell 10 is too small, resulting in an excessively low volumetric energy density of the cell 10, which in turn prevents the cell 10 from meeting normal operation requirements of the battery pack 100.

According to some embodiments of the present disclosure, a thermal and electrical insulating component or an insulating and heat dissipating component is disposed between the second surfaces 122 of two adjacent cells 10 in each cell group 110, or direct contact is implemented between the two, or an air gap is disposed between the two, which can slow down heat diffusion between these two adjacent cells 10 and suppress heat diffusion in the battery pack 100. This can reduce the impact of heat on the cells 10 not in heat diffusion in the battery pack 100, thereby improving operational safety of the battery pack 100.

According to some other embodiments of the present disclosure, the second surfaces 122 of two adjacent cells 10 in each cell group 110 are in contact with each other, so that heat generated by the cell 10 undergoing thermal runaway can be preferentially transferred to the cell 10 not undergoing thermal runaway in the same cell group 110. This can reduce the transfer of heat to other cell groups 110 not undergoing thermal runaway, thereby reducing the impact of the cell group 110 undergoing thermal runaway on the cell group 110 not undergoing thermal runaway in the battery pack 100, and improving operational safety of the battery pack 100.

According to some further embodiments of the present disclosure, the second surfaces 122 of two adjacent cells 10 in each cell group 110 are spaced apart from each other, and there is an air gap between the second surfaces 122 of two adjacent cells 10 in each cell group 110. Specifically, the air gap can prevent heat from transferring between two adjacent cells 10, thereby increasing the heat resistance between adjacent cells 10 in the same cell group 110. This reduces transfer of heat generated by the cell 10 undergoing thermal runaway to the cell 10 not undergoing thermal runaway in the same cell group 110, thereby reducing the impact of the cell 10 undergoing thermal runaway on the adjacent cell 10 and improving operational safety of the battery pack 100.

According to some embodiments of the present disclosure, a thermal and electrical insulating component and an insulating and heat dissipating component are disposed between the first surfaces 121 of the cells 10 in two adjacent cell groups 110. Specifically, the thermal and electrical insulating component has a thermal insulation effect on heat transferred between the first surfaces 13 of the cells 10 in the two adjacent cell groups 110, which can enhance the effect of suppressing heat transfer and further prevent the heat from diffusing in the battery pack 100. The electrical insulation and heat dissipation component can enhance heat dissipation efficiency between the first surfaces 13 of the cells 10 in two adjacent cell groups 110, and can accelerate a heat dissipation rate before heat reaches the first surface 13 of the cell 10 in the cell group 110 not undergoing thermal runaway. This can reduce heat transferred to the first surface 13 of the cell 10 in the cell group 110 not undergoing thermal runaway, thereby enhancing the effect of suppressing heat diffusion in the battery pack 100.

As shown in FIG. 3 to FIG. 6, two sides of the cell 10 along the thickness direction are respectively the second surfaces 122. Each cell group 110 includes at least two cells 10 with the second surfaces 122 in contact with each other. The second surface 122 and the first surface 13 of the cell 10 are perpendicular to each other. Specifically, two sides of the cell 10 along the thickness direction are respectively the second surfaces 122, and the second surface 122 and the first surface 13 are perpendicular to each other. When thermal runaway occurs in cell 10, heat can be transferred outward along two different directions: the first surface 13 and the second surface 122. In an embodiment of the present disclosure, structures of the electrode assembly 11 include a stacked structure and a wound structure. When the electrode assembly 11 is a stacked structure, an area of the second surface 122 is larger than an area of the first surface. When the electrode assembly 11 is a wound structure, a larger one of the first surface 13 and the second surface 122 is a contact surface of two adjacent cells 10 in each cell group 110. The following describes the cell 10 of the stacked structure.

Further, the area of the second surface 122 of the cell 10 is greater than the area of the first surface 13 of the cell 10, that is, a heat transfer rate of the first surface 13 of the cell 10 is less than a heat transfer rate of the second surface 122. When thermal runaway occurs in the electrode assembly 11, heat transferred through the first surface 13 of the cell 10 is less than heat transferred through the second surface 122. This reduces heat transferred through the first surface 13 of the cell 10 to the cell 10 in the adjacent cell group 110, thereby effectively reducing heat transfer between the adjacent cell groups 110 in the battery pack 100. When the first surfaces 13 of the cells 10 in two adjacent cell groups 110 are disposed opposite to each other, heat transferred from the cell group 110 undergoing thermal runaway to the cell group 110 not undergoing thermal runaway can be reduced, thereby suppressing heat diffusion between the adjacent cell groups 110 and further suppressing heat diffusion in the battery pack 100.

In addition, the area of the first surface 13 of the cell 10 is less than the area of the second surface 122. This can reduce a volume of a first material layer 20 between the first surfaces 13 of the cells 10 in two adjacent cell groups 110, and reduce a thermal insulation space between the first surfaces 13 of the cells 10 in the two adjacent cell groups 110, which is beneficial to improving space utilization of the battery pack 100.

According to some further embodiments of the present disclosure, the first surfaces 13 of the cells 10 in two adjacent cell groups 110 are spaced apart from each other, and there is an air gap between the first surfaces 13 of the cells 10 in the two adjacent cell groups 110. Specifically, the air gap can block heat transfer between two adjacent cell groups 110, so that transfer of heat generated by the cell 10 undergoing thermal runaway to the cell 10 not undergoing thermal runaway in the adjacent cell group 110 can be reduced, reducing the impact of the cell group 110 undergoing thermal runaway on the cell group 110 not undergoing thermal runaway, thereby improving operational safety of the battery pack 100.

According to some embodiments of the present disclosure, as shown in FIG. 1, FIG. 2 and FIG. 7, the battery pack 100 further includes a tray 30 and a cold plate 31. One side of the tray 30 is open, and the cold plate 31 is disposed on the open side of the tray 30. The plurality of cells 10 are all disposed in the tray 30. Arrangement positions of the cold plate 31 include, but are not limited to, between the tray 30 and the cell, between two adjacent cells, and at an upper portion of the cell. This arrangement not only facilitates arrangement of the battery pack 100, but also contributes to rapid heat dissipation of the battery pack 100. A plurality of cells 10 are disposed on an upper side of the tray 30. The plurality of cells 10 are all disposed in the tray 30, which allows heat generated in the cell 10 to be quickly dissipated through the tray 30. In this way, the heat can be quickly dissipated through the tray 30 when the cell 10 is undergoing thermal runaway. In addition, when thermal runaway occurs in the cell 10, heat dissipation can alternatively be performed through the cold plate 31 to prevent heat diffusion in the battery pack 100 from affecting operational safety of other cells 10 in battery pack 100.

According to some other embodiments of the present disclosure, the first surface 121 of the bottommost cell 10 of the plurality of cell groups 110 is in contact with the cold plate 31. According to some other embodiments of the present disclosure, the second surface 122 of the bottommost cell 10 of the plurality of cell groups 110 is in contact with the cold plate 31. According to some further embodiments of the present disclosure, the first surface 121 and the second surface 122 of the bottommost cell 10 of the plurality of cell groups 110 are both in contact with the cold plate 31. This configuration allows heat generated by the cell 10 undergoing thermal runaway in the battery pack 100 to be transferred to the cold plate 31 through the bottommost cell 10, and then the heat is diffused to the heat dissipation apparatus through the cold plate 31 to accelerate heat dissipation in the battery pack 100.

According to some embodiments of the present disclosure, the second surface 122 of the cell 10 in one cell group 110 or a plurality of cell groups 110 of the battery pack 100 can be connected to the tray 30 or the cold plate 31, where connection configurations between the second surface 122 of the cell 10 and the tray 30 or the cold plate 31 include, but are not limited to, direct contact, bonding, screwing, and riveting. According to some other embodiments of the present disclosure, the first surface 121 of the cell 10 in one cell group 110 or a plurality of cell groups 110 of the battery pack 100 can directly contact the tray 30 or the cold plate 31, where connection configurations between the first surface 121 of the cell 10 and the tray 30 or the cold plate 31 include, but are not limited to, direct contact, bonding, screwing, and riveting.

According to some embodiments of the present disclosure, when more than two cells 10 are provided in the same cell group 110, the second surface 122 of the cell 10 is in close contact with the cold plate 31. When thermal runaway occurs in the cell 10, heat can be transferred from the cold plate 31 to the heat dissipation apparatus, thereby accelerating a cooling rate of the cell 10 and reducing the probability of runaway in the cell 10. In this way, even if thermal runaway occurs in one cell 10, it will not cause thermal runaway in the adjacent cell group 110, thereby slowing down heat dissipation and reducing safety issues of the battery pack 100. In the embodiments of the present disclosure, a thermal and electrical insulating component or an insulating and heat dissipating component may be filled between two adjacent cells 10 in the same cell group 110, or a thermal and electrical insulating component or an insulating and heat dissipating component may not be filled. The thermal and electrical insulating component or the electrical insulation and heat dissipation component may be filled between two adjacent cell groups 110, and the thermal and electrical insulating component or the electrical insulation and heat dissipation component may be filled between the cell group 110 and the casing 12.

According to some other embodiments of the present disclosure, when there is only one cell 10 in the same cell group 110, the second surface of the cell 10 is in close contact with the cold plate 31. When thermal runaway occurs in the cell 10, heat can be transferred from the cold plate 31 to the heat dissipation apparatus, which accelerates a cooling rate of the cell 10 and avoids thermal runaway of the adjacent cell group 110, thereby slowing down heat diffusion and reducing safety issues of the battery pack 100. In the embodiments of the present disclosure, a thermal and electrical insulating component or the electrical insulation and heat dissipation component may be filled between two adjacent cell groups 110, and the thermal and electrical insulating component or the electrical insulation and heat dissipation component may be filled between the cell group 110 and the casing 12.

According to some further embodiments of the present disclosure, when more than two cells 10 are provided in the same cell group 110, the first surface 121 of the cell 10 is in close contact with the cold plate 31. When thermal runaway occurs in any other cell 10 besides the cell 10 in close contact with the cold plate 31, heat may cause heat diffusion of other cells 10 in the battery pack 100, or may not cause heat diffusion of other cells 10 in the battery pack 100. Through contact of the second surfaces 122 of adjacent cells 10 in the same cell group 110, heat can be evenly diffused within the cell group 110 while reducing a temperature of heat diffusion. This prevents thermal runaway of the adjacent cell group 110, slows down heat diffusion, and reduces safety issues of the battery pack 100. In the embodiments of the present disclosure, a thermal and electrical insulating component or the electrical insulation and heat dissipation component may be filled between two adjacent cell groups 110, and the thermal and electrical insulating component or the electrical insulation and heat dissipation component may be filled between the cell group 110 and the casing 12.

In an embodiment of the present disclosure, the largest surfaces of adjacent cells 10 in the same cell group 110 are in contact with each other, and the small surfaces of the cells 10 in the adjacent cell groups 110 are disposed opposite to each other. This structure for suppressing heat diffusion of the battery pack 100 is not only applicable to any battery, module and pack undergoing thermal runaway, but also applicable to placing materials with high heat conductivity inside the battery to be in close contact with the electrode assembly 11 or the casing 12 to achieve uniform temperature. The embodiments of the present disclosure can be applied between modules to prevent heat diffusion between the modules.

An electrical system according to the present disclosure, as shown in FIG. 7, is provided with the battery pack 100 according to the embodiments of the present disclosure. By selecting a size of the contact surface between the adjacent cells 10 and a size of the contact surface between the adjacent cell groups 110, a large amount of heat can be suppressed from being transferred and diffused between adjacent cells 10 when thermal runaway occurs in the cell 10, thereby effectively improving operational safety of the battery pack 100 and then improving safety of the electrical system.

In the descriptions of the present disclosure, it will be understood that orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "circumferential", "radial", and the like are orientations or positional relationships as shown in the drawings, and are merely for the purpose of facilitating and simplifying the descriptions of the present disclosure instead of indicating or implying that apparatuses or elements indicated must have particular orientations, and be constructed and operated in the particular orientations, so that these terms are not construed as limiting the present disclosure.

In the description of this specification, descriptions referring to terms "an embodiment", "some embodiments", "example embodiments", "examples", "specific examples" or "some examples" indicate that specific features, structures, materials or characteristics described in connection with this embodiment or example are included in at least one embodiment or example of the present disclosure. In this specification, schematic expressions of the foregoing terms do not necessarily refer to the same embodiment or example.

Although the embodiments of the present disclosure have been shown and described, a person of ordinary skill in the art will understand that many changes, modifications, substitutions, and variations can be made to these embodiments without departing from the principles and purposes of the present disclosure, and the scope of the present disclosure is defined by the claims and their equivalents.

## Claims

1. A battery pack (100), comprising:
a cell (10), wherein the cell (10) comprises an electrode assembly (11) and a casing (12), the electrode assembly (11) is disposed in the casing (12), the electrode assembly (11) and a first surface (121) of the casing (12) are spaced apart from each other, the first surface (121) of the casing (12) is a first surface (13) of the cell (10),
a heat resistance of a spacing region between the electrode assembly (11) and the first surface (121) of the casing (12) is denoted as A, and a heat resistance of the electrode assembly (11) in a direction perpendicular to the first surface (13) is denoted as B, wherein A and B satisfy the relationship: 1/48 < A/B.

2. The battery pack (100) according to claim 1, wherein A and B satisfy the relationship: A/B < 10.

3. The battery pack (100) according to claim 1 or 2, wherein a plurality of cells (10) are provided, the plurality of cells (10) constitute a plurality of cell groups (110), each cell group (110) comprises at least two second surfaces (122) disposed opposite to the cell (10), first surfaces (13) of the cells (10) in two adjacent cell groups (110) are disposed opposite to each other, and the second surface (122) of the cell (10) and the first surface (13) of the cell (10) are perpendicular to each other.

4. The battery pack (100) according to any one of claims 1 to 3, wherein a distance between the electrode assembly (11) and the first surface (121) of the casing (12) is denoted as d, a wall thickness of the casing (12) is denoted as a, a heat conductivity of the casing (12) is denoted as λ1, and a length of the cell (10) is denoted as L, wherein d, a, L, λ1 and A satisfy the relationship: A = d/[(2*a*L)*λ1], and d, a and L being in the same unit.

5. The battery pack (100) according to claim 4, wherein a thermal and electrical insulating component or an insulating and heat dissipating component is disposed in the spacing region between the electrode assembly (11) and the first surface (121) of the casing (12).

6. The battery pack (100) according to claim 4 or 5, wherein d satisfies the relationship: 2 mm < d < 12 mm.

7. The battery pack (100) according to any one of claims 4 to 6, wherein L satisfies the relationship: 400 mm < L < 2500 mm.

8. The battery pack (100) according to any one of claims 1 to 7, wherein two sides of the cell (10) along a width direction are respectively the first surfaces (13) of the cell (10), the length of the cell (10) is denoted as L, a width of the cell (10) is denoted as H, a thickness of the cell (10) is denoted as D, and a heat conductivity of the electrode assembly (11) along a direction perpendicular to the first surface (13) is denoted as λ2, wherein H, D, λ2 and B satisfy the relationship: B = H/[(D*L)*λ2], and H, D and L being in the same unit.

9. The battery pack (100) according to claim 8, wherein H satisfies the relationship: 80 mm < H < 200 mm.

10. The battery pack (100) according to claim 8 or 9, wherein D satisfies the relationship: 10 mm < D < 1000 mm.

11. The battery pack (100) according to any one of claims 8 to 10, wherein λ2 satisfies the relationship: 10 W/(m*K) < λ2 < 30 W/(m*K).

12. The battery pack (100) according to any one of claims 3 to 11, wherein a thermal and electrical insulating component or an insulating and heat dissipating component is disposed between the second surfaces (122) of two adjacent cells (10) in each cell group (110); and/or
the second surfaces (122) of two adjacent cells (10) in each cell group (110) are in contact with each other; and/or
the second surfaces (122) of two adjacent cells (10) in each cell group (110) are spaced apart from each other with an air gap therebetween.

13. The battery pack (100) according to any one of claims 1 to 12, wherein a thermal and electrical insulating component or an insulating and heat dissipating component is disposed between the first surfaces (13) of the cells (10) in two adjacent cell groups (110); and/or
the first surfaces (13) of the cells (10) in two adjacent cell groups (110) are in contact with each other; and/or
the first surfaces (13) of the cells (10) in two adjacent cell groups (110) are spaced apart from each other with an air gap therebetween.

14. The battery pack (100) according to any one of claims 1 to 12, further comprising a tray (30) and a cold plate (31), wherein one side of the tray (30) is open, the cold plate (31) is disposed on the open side of the tray (30), and the plurality of cells (10) are disposed in the tray (30).

15. The battery pack (100) according to claim 3, wherein the electrode assembly (11) comprises a plurality of layers of electrode sheets, an extension direction of a single layer of the electrode sheet is a direction perpendicular to the first surface (13) along which the electrode assembly (11) extends, and an arrangement direction of the plurality of layers of electrode sheets is a direction perpendicular to the second surface (122) along which the electrode assembly (11) extends.

16. The battery pack (100) according to claim 3 or 15, wherein an area of the first surface (13) is less than that of the second surface (122).

17. An electrical system (200), comprising the battery pack (100) according to any one of claims 1 to 16.
